# EUROPEAN PATENT SPECIFICATION

(11) **EP 1 239 327 B1**
(45) Date of publication and mention of the grant of the patent: **17.08.2005**
(21) Application number: 02004668.6
(22) Date of filing: 28.02.2002
(51) Int. Cl.: H04M 1/02, G03B 29/00, A45C 11/38, G03B 17/56

(54) **Mobile apparatus incorporating a camera having a hand strap fitting part**
Mobile Vorrichtung mit integriertem Photoapparat und einer Befestigungsvorrichtung für ein Halteband
Appareil mobile incorporant un appareil-photo comprenant un dispositif de fixation de la sangle

(30) Priority: 01.03.2001 JP 2001056784
(43) Date of publication of application: 11.09.2002
(73) Proprietor: Sharp Kabushiki Kaisha, Osaka 545-0013 (JP)
(72) Inventor: Arakane, Toyohiro, Higashihiroshima-Shi, Hiroshima (JP); Imai, Kimiaki, Higashihiroshima-Shi, Hiroshima (JP)
(74) Representative: Müller - Hoffmann & Partner

(56) References cited:
- EP-A- 0 898 405
- WO-A-96/38762
- US-A- 6 047 443

## Description

### Field of the Invention

The present invention relates to a mobile apparatus incorporating a camera having a hand strap fitting part.

### Description of the Prior Art

As is commonly known, mobile telephones incorporating a camera have been developed and come into use gradually in recent years. A mobile telephone in general use has a hand strap fitting part. Therefore, although it is not an indispensably critical part, it is preferable if a mobile telephone incorporating a camera has a hand strap fitting part because a hand strap provides such conveniences as preventing the mobile telephone from being dropped.

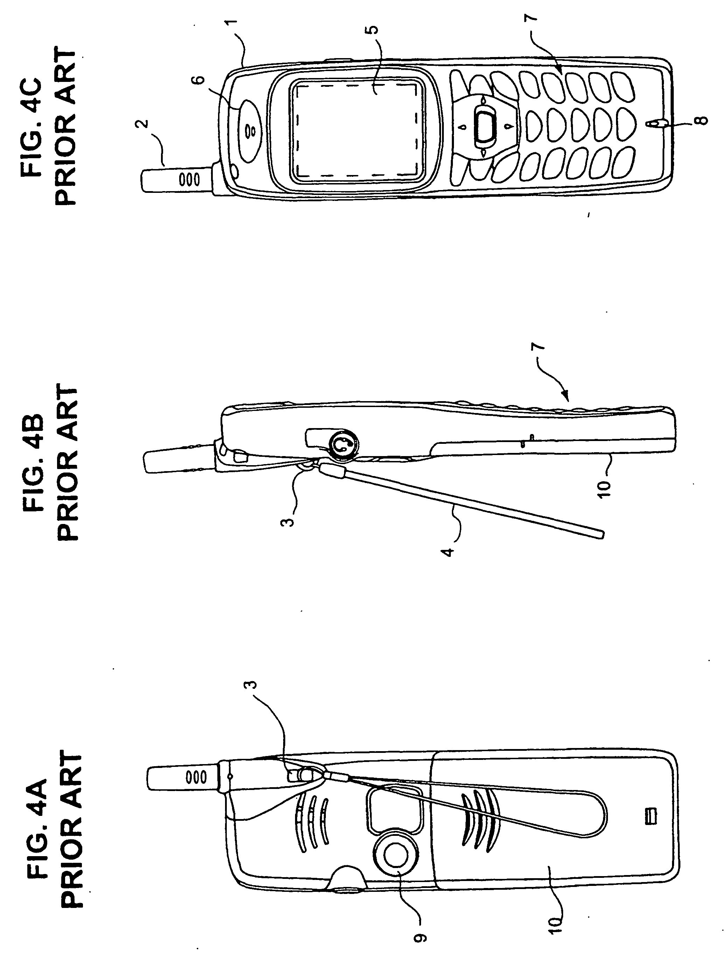

Figs. 4A to 4C are diagrams showing an example of a conventional mobile telephone incorporating a camera. Fig. 4A shows a rear view; Fig. 4B, a side view; and Fig. 4C, a front view. In these figures, reference numeral 1 represents a main unit of a mobile telephone; reference numeral 2, an antenna; reference numeral 3, a hand strap fitting part; reference numeral 4, a hand strap; reference numeral 5, a display section; reference numeral 6, an earphone section; reference numeral 7, an input panel; reference numeral 8, a microphone section; reference numeral 9, a camera lens; and reference numeral 10, a lid for covering a battery storage section (not shown).

While taking a photograph with a conventional mobile telephone incorporating a camera, it is always necessary to pay an attention to a position of the hand strap 4 so that the hand strap 4 does not move into a field of view of the camera lens 9, because the hand strap fitting part 3 is located at a top portion of the main unit of the mobile telephone 1. However, sometimes, a photographer is distracted by a photographic object and presses a shutter while not knowing the hand strap 4 has moved in front of the camera lens 9. It also happens that the hand strap 4, flapped by the wind just before the shutter is pressed, passes in front of the camera lens and is photographed. Sometimes, the hand strap 4 moves in front of the camera lens 9 when the main unit of the mobile telephone incorporating a camera 1 is tilted when a photograph is taken. If the hand strap 4 is photographed accidentally, photographic films or prints containing intended photographic objects would be wasted. This type of problem is inherent not only in a mobile telephone incorporating a camera but also in another mobile apparatus incorporating a camera having a hand strap fitting part.

The document EP-A-0898405 discloses an information communication terminal device and in particular a mobile apparatus incorporating a camera, but does not disclose a hand strap nor a structure providing a hand strap fitting part.

Further, the document US-A-6047443 relates to a hand strap storage structure for a portable terminal device and, particularly, to a hand strap storage structure for a cellular telephone. However, this known device does not incorporate a camera, and the hand strap there is fitted in an end region of a terminal device main body, probably in an upper end portion thereof.

### SUMMARY OF THE INVENTION

An object of the present invention is to provide a solution for the aforementioned problem, i.e., to prevent the hand strap from passing in front of the camera lens and being photographed.

To achieve the above object, according to one aspect of the present invention, a mobile apparatus incorporating a camera is characterized by a hand strap fitting part formed in a position that comes below the camera lens when the mobile apparatus is held for ordinary photographing so that a hand strap connected to the hand strap fitting part does not move into a field of view of the camera lens.

This arrangement prevents the hand strap from being located in front of the camera lens when a photograph is taken, thereby making it possible to prevent the hand strap from swinging in the wind in front of the camera lens and from being photographed.

Furthermore, according to another aspect of the present invention, a mobile apparatus incorporating a camera comprises a hand strap fitting part, a camera lens, and at least one hook-shaped protrusion formed integrally with a housing of the mobile apparatus, wherein a gap is formed between the hook-shaped protrusion and the housing of the mobile apparatus so that, when a hand strap is inserted therein, the hand strap is pinched and thereby held so as to be prevented from swinging and thereby kept outside a field of view of the camera lens, and the hand strap fitting part and one hook-shaped protrusion for holding a free-end portion of the hand strap are located on an identical surface on which the camera lens is located.

According to this arrangement, it is possible to prevent the hand strap from being located in front of the camera lens when a photograph is taken, thereby making it possible to prevent the hand strap from swinging in the wind and from being photographed accidentally. It is also possible to prevent the hand strap from being photographed when the main unit of the mobile telephone is tilted for photographing.

Furthermore, according to another aspect of the present invention, a mobile apparatus incorporating a camera comprises a hand strap fitting part, a camera lens, and at least one hook-shaped protrusion formed integrally with a housing of the mobile apparatus, wherein a gap is formed between the hook-shaped protrusion and the housing of the mobile apparatus so that, when a hand strap is inserted therein, the hand strap is pinched and thereby held so as to be prevented from swinging and thereby kept outside a field of view of the camera lens, and the hand strap fitting part is located on an identical surface on which the camera lens is located, and two hook-shaped protrusions for holding a free-end portion and a tied-end portion of the hand strap respectively are formed on a surface situated toward a side of the camera lens.

According to this arrangement in which the hand strap is more securely held, it is possible to prevent the hand strap from being located in front of the camera lens when a photograph is taken, thereby making it possible to prevent the hand strap from swinging in the wind and from being photographed accidentally. It is also possible to prevent the hand strap from being photographed when the main unit of the mobile apparatus is tilted for photographing.

### BRIEF DESCRIPTION OF THE DRAWINGS

This and other objects and features of the present invention will become clear from the following description, taken in conjunction with the preferred embodiments with reference to the accompanying drawings in which:
Fig. 1A is a drawing showing a rear view of a mobile telephone incorporating a camera of a first embodiment;
Fig. 1B is a drawing showing a side view of the mobile telephone incorporating a camera of the first embodiment;
Fig. 1C is a drawing showing a front view of the mobile telephone incorporating a camera of the first embodiment;
Fig. 2A is a drawing showing a rear view of a mobile telephone incorporating a camera of a second embodiment;
Fig. 2B is a drawing showing a side view of the mobile telephone incorporating a camera of the second embodiment;
Fig. 2C is a drawing showing a front view of the mobile telephone incorporating a camera of the second embodiment;
Fig. 2D is a drawing showing a cross sectional view of A-A shown in Fig. 2A;
Fig. 3A is a drawing showing a rear view of a mobile telephone incorporating a camera of a third embodiment;
Fig. 3B is a drawing showing a side view of the mobile telephone incorporating a camera of the third embodiment;
Fig. 3C is a drawing showing a front view of the mobile telephone incorporating a camera of the third embodiment;
Fig. 3D is a drawing showing a cross sectional view of B-B shown in Fig. 3B;
Fig. 4A is a drawing showing a rear view of a conventional mobile telephone incorporating a camera;
Fig. 4B is a drawing showing a side view of the conventional mobile telephone incorporating a camera; and
Fig. 4C is a drawing showing a front view of the conventional mobile telephone incorporating a camera.

### DESCRIPTION OF THE PREFERRED EMBODIMENTS

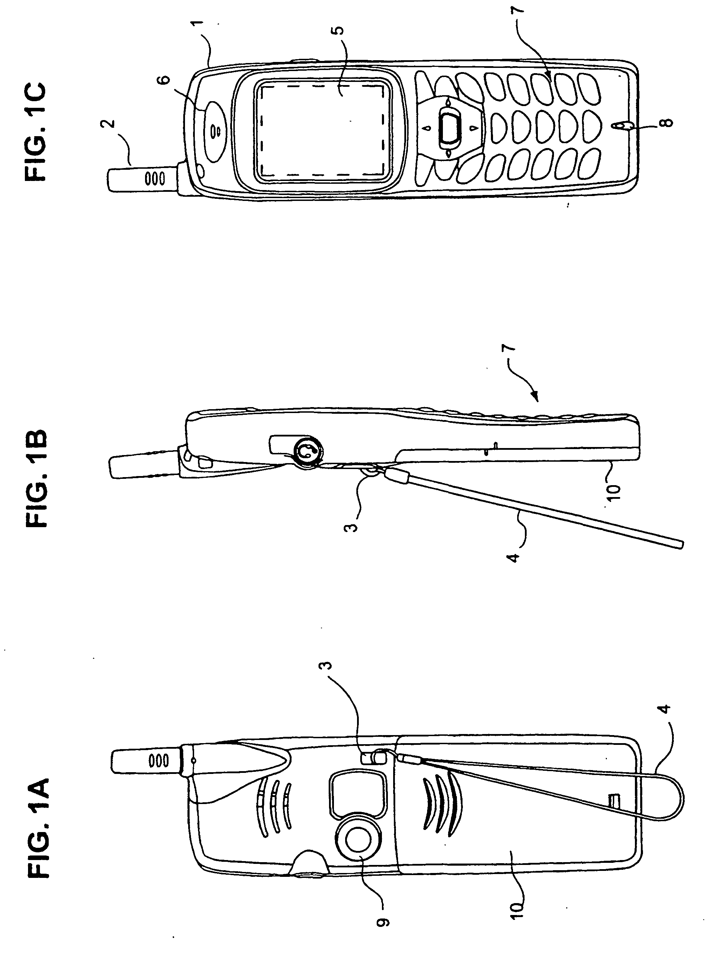

Hereinafter, embodiments of the present invention applied to a mobile telephone will be described with reference to the accompanying drawings. Figs. 1A to 1C show a first embodiment of the present invention, with Fig. 1A showing a rear view, Fig. 1B showing a side view, and Fig. 1C showing a front view. In the embodiments of the present invention described hereinafter, such components as are found also in Figs. 4A to 4C are identified with the same reference numerals, and overlapping descriptions will not be repeated.

In this embodiment, a hand strap fitting part 3 is formed in a position that comes below a camera lens 9 when a main unit of a mobile telephone 1 is held upright for ordinary photographing, with a top portion thereof being directed upward. According to this arrangement, a hand strap 4 will not be located in front of a camera lens 9 even without paying an attention thereto when a photograph is taken. In this case, it is preferable if the hand strap fitting part is formed in a location in such a way that a swinging center of the hand strap 4 comes below a horizontal line tangential to a bottom edge of the camera lens 9 when the main unit of the mobile telephone 1 is held upright. According to this arrangement, it is considered not likely that the hand strap 4 passes in front of the camera lens 9 even if the main unit of the mobile telephone 1 is tilted for photographing or the hand strap 4 is flapped by the wind unless the hand strap 4 rotates more than 90 degrees in order to pass in front of the camera lens 9. In this way, it is possible to prevent the hand strap 4 from being photographed accidentally and thereby prevent photographic films and prints from being wasted.

According to the embodiment, the location of the hand strap fitting part 3 is the only difference from the conventional mobile telephone incorporating a camera. Therefore, a cost incurred by components is not increased because no additional components are required.

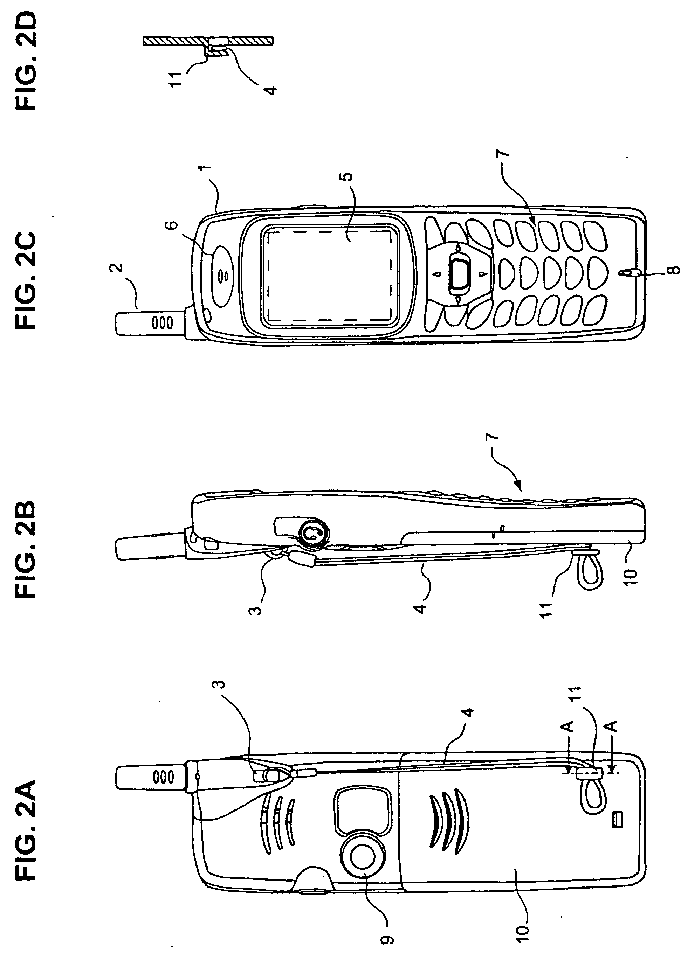

Figs. 2A to 2D show a second embodiment of the present invention, with Fig. 2A showing a rear view, Fig. 2B showing a side view, Fig. 2C showing a front view, and Fig. 2D showing a cross sectional view of A-A section. In this embodiment, a protrusion 11 (holding means) is integrally formed with a lid 10 (a housing) on a lower portion of an external surface of the lid 10. The protrusion 11 is formed in a hook shape when viewed in cross section and is directed downward so that a narrow gap is formed between the protrusion 11 and the lid 10 for pinching and holding a free-end portion of the hand strap 4 when the free-end portion is inserted therein. The protrusion 11 holds the hand strap 4 at a side opposite to the camera lens 9, thereby making it possible to prevent the hand strap 4 from being located in front of the camera lens when a photograph is taken. In addition, in this arrangement, the hand strap 4 does not swing and is not photographed accidentally even if the wind blows or the main unit of the mobile telephone 1 is tilted for photographing.

According to this embodiment, since the protrusion 11 is formed integrally with the lid 10, although a manufacturing cost of a mold for producing the lid 10 is slightly higher than that for the conventional mobile telephone incorporating a camera, a cost incurred by components is not increased because this embodiment does not require any additional components.

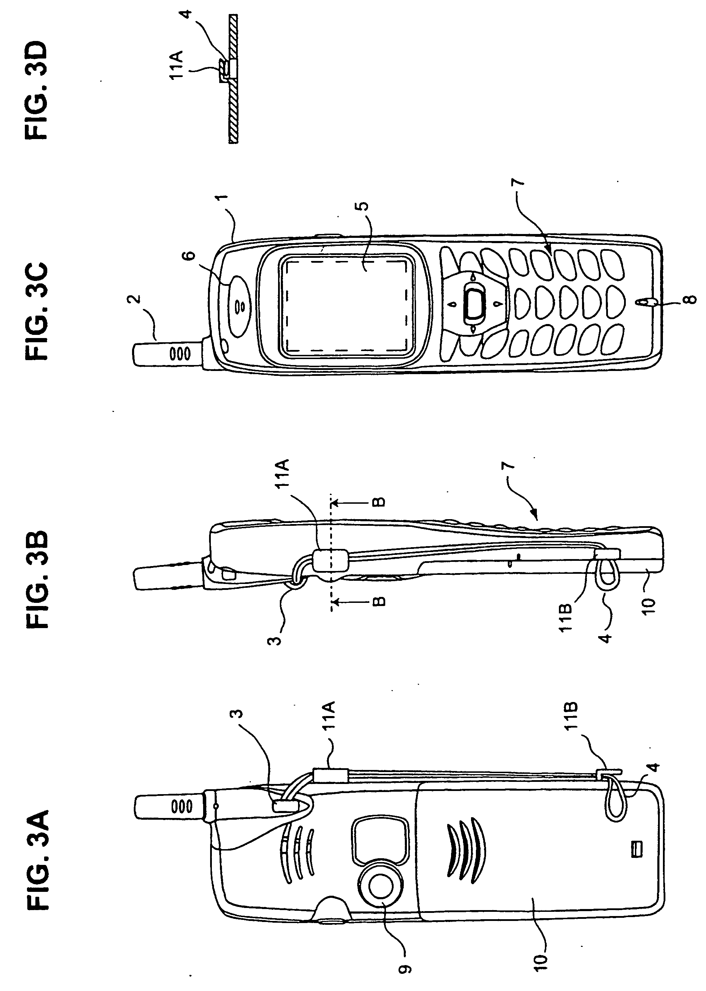

Figs. 3A to 3D show a third embodiment of the present invention, with Fig. 3A showing a rear view, Fig. 3B showing a side view, Fig. 3C showing a front view, and Fig. 3D showing a cross sectional view of B-B section. In this embodiment, a protrusion 11A (holding means) and a protrusion 11B (holding means) are formed integrally with a housing of a main unit of a mobile telephone 1 on an upper and a lower portions of a side face of the housing respectively. The protrusion 11A is formed in a hook shape when viewed in cross section and is directed toward a front so that a narrow gap is formed between the protrusion 11 A and the side face of the housing of the main unit of the mobile telephone 1 for pinching and holding a tied-end portion of the hand strap 4 when the tied-end portion of the hand strap 4 is inserted therein.

At the same time, the protrusion 11B is formed in a hook shape when viewed in cross section and is directed downward so that a narrow gap is formed between the protrusion 11 B and the side face of the housing of the main unit of the mobile telephone I for pinching and holding a free-end portion of the hand strap 4 when the free-end portion of the hand strap 4 is inserted therein. Since the protrusions 11A and 11B pinch and hold the hand strap 4 on the side face of the housing, it is possible to prevent the hand strap 4 from being located in front of the camera lens when a photograph is taken. In addition, in this arrangement, the hand strap 4 does not swing and is not photographed accidentally even if the wind blows or the main unit of the mobile telephone 1 is tilted for photographing.

According to this embodiment, since the protrusions 11A and 11B are formed integrally with the housing, a manufacturing cost of a mold for producing the housing is slightly higher than that for the conventional mobile telephone incorporating a camera. However, a cost incurred by components is not increased because this embodiment does not require any additional components.

It is to be understood that the present invention is applicable not only to a mobile telephone but also to another mobile apparatus.

As described previously, according to the first embodiment of the present invention, the hand strap fitting part is formed in a position that comes below the camera lens when the mobile apparatus is held for ordinary photographing so that the hand strap connected to the hand strap fitting part does not move into a field of view of the camera lens. This arrangement prevents the hand strap from being located in front of the camera lens when a photograph is taken, thereby making it possible to prevent the hand strap from swinging in the wind in front of the camera lens and from being photographed. Moreover, the location of the hand strap fitting part is the only difference from the conventional mobile apparatus incorporating a camera. Therefore, a cost incurred by components is not increased because no additional components are required.

According to the second embodiment of the present invention, a gap is formed between the hook-shaped protrusion and the housing of the mobile apparatus so that, when the hand strap is inserted therein, the hand strap is pinched and thereby held so as to be prevented from swinging and thereby kept outside a field of view of the camera lens, and the hand strap fitting part and one hook-shaped protrusion for holding the free-end portion of the hand strap are located on an identical surface on which the camera lens is located. According to this arrangement, it is possible to prevent the hand strap from being located in front of the camera lens when a photograph is taken, thereby making it possible to prevent the hand strap from swinging in the wind and from being photographed accidentally. It is also possible to prevent the hand strap from being photographed when the main unit of the mobile apparatus is tilted for photographing.

According to the third embodiment, a gap is formed between the hook-shaped protrusion and the housing of the mobile apparatus so that, when the hand strap is inserted therein, the hand strap is pinched and thereby held so as to be prevented from swinging and thereby kept outside a field of view of the camera lens, and the hand strap fitting part is located on an identical surface on which the camera lens is located, and two hook-shaped protrusions for holding the free-end portion and the tied-end portion of the hand strap respectively are formed on a surface situated toward a side of the camera lens. According to this arrangement in which the hand strap is more securely held, it is possible to prevent the hand strap from being located in front of the camera lens when a photograph is taken, thereby making it possible to prevent the hand strap from swinging in the wind and from being photographed accidentally. It is also possible to prevent the hand strap from being photographed when the main unit of the mobile apparatus is tilted for photographing. Although a manufacturing cost of a mold for producing the housing is slightly higher than that for the conventional mobile apparatus incorporating a camera, an overall manufacturing cost is not significantly increased because this embodiment does not require any additional components and a cost incurred by components is not increased.

## Claims

1. A mobile apparatus, especially a mobile telephone, incorporating a camera comprising a camera lens (9),
**characterized by**
a hand strap fitting part (3) formed in a position that comes below the camera lens (9) when the mobile apparatus is held for ordinary photographing so that a hand strap (4) connected to the hand strap fitting part (3) does not move into a field of view of the camera lens (9).

2. A mobile apparatus as claimed in claim 1,
**characterized in that**
the hand strap fitting part (3) is located in such a way that a swinging center of the hand strap (4) comes below a horizontal line tangential to a bottom edge of the camera lens (9) when the mobile apparatus is held upright.

3. A mobile apparatus as claimed in claim 1,
**characterized in that**
the hand strap fitting part (3) is located on an identical surface on which the camera lens (9) is located.

4. A mobile apparatus as claimed in at least one of claims 1 to 3,
**characterized by**
a hand strap holding means (11, 11A, 11B) for holding a hand strap (4) so that the hand strap (4) is kept outside the field of view of the camera lens (9).

5. A mobile apparatus as claimed in claim 4,
**characterized in that**
the hand strap holding means is a gap in which a free-end portion of the hand strap (4) is inserted so as to be pinched and thereby held.

6. A mobile apparatus as claimed in claim 4,
**characterized in that**
the hand strap holding means is a hook-shaped protrusion (11, 11A) formed integrally with a housing (10) of the mobile apparatus.

7. A mobile apparatus as claimed in claim 4 or 5,
**characterized in that**
at least one hook-shaped protrusion (11, 11A) is formed integrally with the housing (10) of the mobile apparatus,
wherein a gap is formed between the hook-shaped protrusion (11, 11A) and the housing (10) of the mobile apparatus so that, when a hand strip (4) is inserted therein, the hand strap (4) is pinched and thereby held so as to be prevented from swinging and thereby kept outside a field of view of the camera lens (9).

8. A mobile apparatus as claimed in at least one of claims 1 to 7.
**characterized in that**
the hand strap fitting part (3) and one hook-shaped protrusion (11, 11A) for holding a free-end portion of the hand strap (4) are located on an identical surface on which the camera lens (9) is located.

9. A mobile apparatus as claimed in at least one of claims 1 to 7
**characterized in that**
two hook-shaped protrusions (11, 11A) for holding a free-end portion and a tied-end portion of the hand strap (4) respectively are formed on a surface situated toward a side of the camera lens (9).

## Patentansprüche

1. Mobilgerät, insbesondere Mobiltelefon, mit einer Kamera mit einer Kameralinse (9);
**gekennzeichnet durch**
- einen Halteband-Befestigungsteil (3), der an einer Position ausgebildet ist, die unter der Kameralinse (9) liegt, wenn das Mobilgerät für normales Fotografieren gehalten wird, so dass sich ein mit dem Halteband-Befestigungsteil (3) verbundenes Halteband (4) nicht in das Gesichtsfeld der Kameralinse (9) bewegt.

2. Mobilgerät nach Anspruch 1,
**dadurch gekennzeichnet, dass**
- der Halteband-Befestigungsteil (3) auf solche Weise positioniert ist, dass ein Schwingungszentrum des Haltebands (4) unter einer horizontalen Linie tangential an der Unterkante der Kameralinse (9) liegt, wenn das Mobilgerät aufrecht gehalten wird.

3. Mobilgerät nach Anspruch 1,
**dadurch gekennzeichnet, dass**
- der Halteband-Befestigungsteil (3) an derselben Fläche liegt, an der die Kameralinse (9) liegt.

4. Mobilgerät nach mindestens einem der Ansprüche 1 bis 3,
**gekennzeichnet durch**
- eine Halteband-Halteeinrichtung (11, 11A, 11B) in solcher Weise, dass es außerhalb des Gesichtsfeld der Kameralinse (9) gehalten wird.

5. Mobilgerät nach Anspruch 4,
**dadurch gekennzeichnet, dass**
- die Halteband-Halteeinrichtung ein Zwischenraum ist, in den ein freier Endabschnitt des Haltebands (4) eingeführt ist, um festgeklemmt und dadurch gehalten zu werden.

6. Mobilgerät nach Anspruch 4,
**dadurch gekennzeichnet, dass**
- die Halteband-Halteeinrichtung ein hakenförmiger Vorsprung (11, 11A) ist, der einstückig mit einem Gehäuse (10) des Mobilgeräts ausgebildet ist.

7. Mobilgerät nach Anspruch 4 oder 5,
**dadurch gekennzeichnet, dass**
- mindestens ein hakenförmiger Vorsprung (11, 11A) einstückig mit dem Gehäuse (10) des Mobilgeräts ausgebildet ist;
- wobei zwischen dem hakenförmigen Vorsprung (11, 11A) und dem Gehäuse (10) des Mobilgeräts ein Zwischenraum so ausgebildet ist, dass dann, wenn ein Halteband (4) in ihn eingeführt ist, dasselbe festgeklemmt wird und dadurch gehalten wird, um zu verhindern, dass es schwingt, wodurch es außerhalb des Gesichtsfelds der Kameralinse (9) gehalten wird.

8. Mobilgerät nach mindestens einem der Ansprüche 1 bis 7,
**dadurch gekennzeichnet, dass**
- der Halteband-Befestigungsteil (3) und ein hakenförmiger Vorsprung (11, 11A) zum Halten eines freien Endabschnitts des Haltebands (4) an derselben Fläche liegen, an der die Kameralinse (9) liegt.

9. Mobilgerät nach mindestens einem der Ansprüche 1 bis 7,
**dadurch gekennzeichnet, dass**
- zwei hakenförmige Vorsprünge (11, 11A) zum Halten eines freien Endabschnitts bzw. eines festgeknoteten Endabschnitts des Haltebands (4) an einer Fläche ausgebildet sind, die zu einer Seite der Kameralinse (9) hin liegt.

## Revendications

1. Appareil mobile, et particulièrement téléphone mobile, incorporant un appareil photo comprenant une lentille d'appareil photo (9),
**caractérisé par**
un dispositif de fixation de dragonne (3) réalisé dans une position qui vient au-dessous de la lentille d'appareil photo (9) lorsque l'appareil mobile est maintenu pour une photographie ordinaire de telle sorte qu'une dragonne (4) reliée au dispositif de fixation de dragonne (3) ne se déplace pas dans un champ de vision de la lentille d'appareil photo (9).

2. Appareil mobile selon la revendication 1,
**caractérisé en ce que**
le dispositif de fixation de dragonne (3) est situé de telle sorte qu'un centre de basculement de la dragonne (4) vient au-dessous d'une ligne horizontale tangentielle à une bordure inférieure de la lentille d'appareil photo (9) lorsque l'appareil mobile est maintenu droit.

3. Appareil mobile selon la revendication 1,
**caractérisé en ce que**
le dispositif de fixation de dragonne (3) est situé sur une surface identique à celle sur laquelle se situe la lentille d'appareil photo (9).

4. Appareil mobile selon l'une quelconque des revendications 1 à 3,
**caractérisé par**
un moyen de maintien de dragonne (11, 11A, 11B) permettant de maintenir une dragonne (4) de manière à ce que la dragonne (4) soit maintenue à l'extérieur du champ de vision de la lentille de l'appareil photo (9).

5. Appareil mobile selon la revendication 4,
**caractérisé en ce que**
le moyen de maintien de dragonne est un espace dans lequel une partie d'extrémité libre de la dragonne (4) est insérée afin d'être pincée et par conséquent maintenue.

6. Appareil mobile selon la revendication 4,
**caractérisé en ce que**
le moyen de maintien de dragonne est une protubérance en forme de crochet (11, 11A) faisant partie intégrante d'un boîtier (10) de l'appareil mobile.

7. Appareil mobile selon la revendication 4 ou 5,
**caractérisé en ce que**
au moins une protubérance en forme de crochet (11, 11A) fait partie intégrante du boîtier (10) de l'appareil mobile,
dans lequel un espace est ménagé entre la protubérance en forme de crochet (11, 11A) et le boîtier (10) de l'appareil mobile de telle sorte que, lorsqu'une dragonne (4) y est insérée, la dragonne (4) est pincée et par conséquent maintenue afin d'éviter qu'elle bascule, et, par conséquent, qu'elle soit maintenue à l'extérieur d'un champ de vision de la lentille d'appareil photo (9).

8. Appareil mobile selon l'une au moins des revendications 1 à 7,
**caractérisé en ce que**
le dispositif de fixation de dragonne (3) et une protubérance en forme de crochet (11, 11A) pour maintenir une partie d'extrémité libre de la dragonne (4) sont situés sur une surface identique à celle sur laquelle est placée la lentille d'appareil photo (9).

9. Appareil mobile selon l'une au moins des revendications 1 à 7,
**caractérisé en ce que**
deux protubérances en forme de crochet (11, 11A) destinées à maintenir une partie d'extrémité libre et une partie d'extrémité fixe de la dragonne (4), respectivement, sont réalisées sur une surface située en direction d'un côté de la lentille d'appareil photo (9).
